# EUROPÄISCHE PATENTSCHRIFT

(11) **EP 4 428 396 B1**
(45) Veröffentlichungstag und Bekanntmachung des Hinweises auf die Patenterteilung: **15.10.2025**
(21) Anmeldenummer: 24162071.5
(22) Anmeldetag: 07.03.2024
(51) Int. Cl.: F16H 47/06, F16H 1/08, F16H 57/00

(54) **VERFAHREN ZUM UMRÜSTEN EINES ANTRIEBSSTRANGS**
METHOD FOR RETROFITTING A DRIVE TRAIN
PROCÉDÉ DE RÉÉQUIPEMENT D'UN GROUPE MOTOPROPULSEUR

(30) Priorität: 08.03.2023 DE 202023101088 U; 15.06.2023 DE 102023115727
(43) Veröffentlichungstag der Anmeldung: 11.09.2024
(73) Patentinhaber: Bodenmüller Hörburger Schratt Antriebstechnik GmbH & Co. KG, 87437 Kempten (DE)
(72) Erfinder: SEESTALLER, Franz, 87437 Kempten (DE); EITERER, Stefan, 87437 Kempten (DE); NATTERER, Christian, 87437 Kempten (DE)
(74) Vertreter: Winter, Brandl - Partnerschaft mbB

(56) Entgegenhaltungen:
- DE-A1- 102014 220 436
- DE-A1- 102019 108 808

## Beschreibung

Die Erfindung betrifft ein Verfahren zum Umrüsten eines Antriebsstrangs, der einen Motor, eine durch den Motor antreibbare Eingangswelle, eine mit der Eingangswelle verbundene Übertragungseinheit und eine mit der Übertragungseinheit verbundene Ausgangswelle aufweist, wobei die Übertragungseinheit eine mit der Eingangswelle gekoppelte Antriebswelle, eine mit der Ausgangswelle gekoppelte Abtriebswelle und eine die Antriebswelle mit der Abtriebswelle koppelnde hydrodynamische Kupplung aufweist.

Solch ein drehzahlvariabler Antriebsstrang weist einen bestehenden oder neuen Motor mit einem zusätzlichen (Multilevel) - Frequenzumrichter bzw. Frequenzumrichtern mit motorfreundlicher Technologie, einer Welle und einer Übertragungseinheit als drehzahlvariablen hydromechanischen Antriebsstrang mit und ohne einstufigen oder zweistufigen Getriebe zum Betreiben von drehzahlvariablen Arbeitsmaschinen auf. Die Erfindung ist auch nicht nur für Multilevel- Frequenzumrichter geeignet, sondern auch mit Sinusfiltern, d.h. einem motorfreundlichen Frequenzumrichter geeignet, welcher eine Sinusform sehr gut abbildet.

Solche Antriebsstränge können beispielsweise in der Produktionstechnik oder der Industrie zum Einsatz kommen, in welchem insbesondere Pumpen und / oder Kompressoren für die Produktion genutzt werden. Solche Antriebsstränge der Industrie weisen oft eine hydrodynamische Kupplung mit und ohne Getriebe auf, welche zum einen Regelabweichungen aufweisen und energieintensiv ist.

Im Stand der Technik zum Betreiben von drehzahlvariablen Arbeitsmaschinen in der Leistungskategorie von mehreren Megawatt und in einem Drehzahlbereich bis 20.000 Umdrehungen pro Minute und mehr gelangen als drehzahlvariable Antriebe mit hydrodynamischer Kupplung mit oder ohne Getriebestufen zum Einsatz. Solche drehzahlvariablen Arbeitsmaschinen können Pumpen in Kraftwerken, auch als Kesselspeisepumpen bekannt, oder Kompressoren für Gaspipelines in einem Drehzahlbereich oberhalb von 1500 Umdrehungen pro Minute und mit einer Leistungsaufnahme von mehreren Megawatt, beispielsweise von 3 bis 20 MW oder mehr sein.

Aus der DE 10 2019 108 808 A1 ist ein Antriebsstrang mit einer über eine Übertragungseinheit mit einer Ausgangswelle verbundenen Eingangswelle bekannt, wobei zwischen einer Antriebswelle und einer Abtriebswelle in einer ersten Ausführungsform eine hydrodynamische Kupplung vorgesehen und in einer zweiten Ausführungsform eine starre Wellenverbindung vorgesehen ist.

Aus der DE 10 2014 220 436 A1 ist eine Antriebsvorrichtung sowie ein Antriebsstrang mit mehreren solcher Antriebsvorrichtungen bekannt, deren Motor über einen Frequenzumrichter angesteuert wird, wobei jede der Ausführungsformen der Antriebsvorrichtung eine hydrodynamische Kupplung aufweist.

Es ist daher die Aufgabe der vorliegenden Erfindung, einen verbesserten Antriebsstrang bereitzustellen, der die Nachteile des Stands der Technik, insbesondere bezogen auf die Antriebe und Übertragungseinheiten mit hydrodynamischer Kupplung, diese hydrodynamischen Kupplungen zu eliminieren.

Die Aufgabe wird durch ein Verfahren gemäß dem unabhängigen Patentanspruch gelöst. Vorteilhafte Ausgestaltungen sind Gegenstand der Unteransprüche.

Insbesondere wird die Aufgabe durch ein Verfahren zum Umrüsten eines Antriebsstrangs gelöst, der einen Motor, eine durch den Motor antreibbare Eingangswelle, eine mit der Eingangswelle verbundene Übertragungseinheit und eine mit der Übertragungseinheit verbundene Ausgangswelle (die wiederum mit einer Arbeitsmaschine verbunden oder verbindbar ist) aufweist, wobei die Übertragungseinheit eine mit der Eingangswelle gekoppelte Antriebswelle, eine mit der Ausgangswelle gekoppelte Abtriebswelle und eine die Antriebswelle mit der Abtriebswelle koppelnde hydrodynamische Kupplung aufweist, mit den folgenden Schritten:
- Entnahme (bzw. Ausbau) der hydrodynamischen Kupplung;
- Einbau (bzw. Einsetzen) einer Wellenverbindung zur Kopplung der Antriebswelle mit der Abtriebswelle, wobei die Wellenverbindung die Antriebswelle und die Abtriebswelle mit einem Übersetzungsverhältnis von 1/1 drehmomentübertragend verbindet;
- Einbau eines Frequenzumrichters;
- Einrichten des Frequenzumrichters:
   a) Anschließen des Frequenzumrichters an den Motor; und
   b) Anschließen des Frequenzumrichters an eine Stromversorgung/ein
   Versorgungsnetz.

Dabei können die Antriebswelle und die Abtriebswelle (vor der Entnahme der hydrodynamischen Kupplung) insbesondere direkt mit der hydrodynamischen Kupplung verbunden sein. Das heißt, dass die ursprünglich (d.h. vor dem Durchführen des Umrüstverfahrens) durch die hydrodynamische Kupplung gekoppelten Wellen nach dem Durchführen des Umrüstverfahrens über die Wellenverbindung gekoppelt sind, wobei die Wellenverbindung dazu ausgelegt ist, um schaltfrei und ohne Wandlung Drehzahlen / Drehmoment zu übertragen. Es wird also ein starres Übersetzungsverhältnis (von 1) realisiert. Es liegt demnach eine schaltfreie Drehmomentübertragung (ohne Trennkupplung bzw. Schaltkupplung, deren Zustand selektiv verändert wird), keine Wandlung von Drehzahl und Drehmoment, keine Übersetzung und keine Untersetzung innerhalb der Wellenverbindung und/oder von der Antriebswelle zu der Abtriebswelle vor. Mit anderen Worten liegt kein Schlupf zwischen der Antriebswelle und der Abtriebswelle. Der Antriebswelle kann eine (oder mehrere) Getriebestufe vorgeschaltet sein. Der Abtriebswelle kann eine (oder mehrere) Getriebestufe nachgeschaltet sein.

Durch den Ausbau der hydrodynamischen Kupplung ist, wie oben beschrieben, keine Drehzahl-/Drehmomentänderung (etwa durch Fluidfüllstandsänderung in der hydrodynamischen Kupplung) mehr gegeben, so dass in dem Umrüstverfahren der Frequenzumrichter an den Motor angeschlossen wird, um einen drehzahlvariablen Betrieb des Motors einzurichten. Somit wird in dem umgerüsteten Antriebsstrang der drehzahlvariable Betrieb durch die (durch den Frequenzumrichter realisierte) Modulation eines Motor-Eingangssignals erreicht, so dass die nunmehr ohne hydrodynamische Kupplung, sondern mit der schlupffreien, drehzahl- und drehmoment-konstanten/wandlungsfreien Wellenverbindung ausgeführte Übertragungseinheit für die vorgesehene Verwendung zum Betrieb einer Arbeitsmaschine mit variabler Drehzahl geeignet ist.

Gemäß einer bevorzugten Ausführungsform kann das Verfahren die folgenden Schritte aufweisen:
- Überprüfen einer Eignung des (vor dem Umrüsten in dem Antriebsstrang eingesetzten) Motors zum drehzahlvariablen Betrieb mittels des Frequenzumrichters, vorzugsweise vor dem Einrichten des Frequenzumrichters; und
- Ersetzen des (vor dem Umrüsten in dem Antriebsstrang eingesetzten) Motors durch einen anderen Motor, wenn der (vor dem Umrüsten in dem Antriebsstrang eingesetzte) Motor nicht zum drehzahlvariablen Betrieb mittels des Frequenzumrichters geeignet ist, oder
- Weiterverwenden des (vor dem Umrüsten in dem Antriebsstrang eingesetzten) Motors, wenn der (vor dem Umrüsten in dem Antriebsstrang eingesetzte) Motor zum drehzahlvariablen Betrieb mittels des Frequenzumrichters geeignet ist.

Das heißt, dass der Motor, der vor dem Durchführen des Umrüstverfahrens in dem Antriebsstrang eingesetzt wurde und (ausschließlich) eine feste Drehzahl ausgibt, entweder zum drehzahlvariablen Betrieb mittels dem Frequenzumrichter ertüchtigt wird oder, falls eine Ertüchtigung nicht möglich ist, durch einen zum drehzahlvariablen Betrieb mittels dem Frequenzumrichter geeigneten Motor ausgetauscht wird. Durch die potentielle Weiterverwendung des Motors können Kosten gespart werden.

Gemäß einer Weiterbildung der bevorzugten Ausführungsform kann das Überprüfen der Eignung zumindest einen der folgenden Schritte enthalten:
- Überprüfen eines Motorzustands; und/oder
- Überprüfen einer Motorisolation; und/oder
- Überprüfen einer Motorkühlleistung.

Das heißt, dass bei der Weiterverwendung des Motors der Motorzustand und/oder die Motorisolation und/oder die Motorkühlleistung berücksichtigt wird und bei der Weiterverwendung des Motors ggf. angepasst wird, insbesondere im Fall einer nicht ausreichenden Isolation und/oder Kühlung.

Gemäß einer bevorzugten Ausführungsform kann das Verfahren den folgenden Schritt aufweisen:
- Entkopplung des Motors von einer Stromversorgung/einem Versorgungsnetz, vorzugsweise vor dem Einrichten des Frequenzumrichters.

So können nicht (mehr) benötigte Verbindungen entfernt werden.

Gemäß einer bevorzugten Ausführungsform kann das Verfahren den folgenden Schritt aufweisen:
- Entnahme einer Steuer- und Regeleinheit zur Steuerung der hydrodynamischen Kupplung und Entkopplung der Steuer- und Regeleinheit von einer zentralen Leittechnik des Antriebsstrangs.

So können nicht (mehr) benötigte Komponenten entfernt werden.

Gemäß einer bevorzugten Ausführungsform kann das Verfahren den folgenden Schritt aufweisen:
- Anschließen des Frequenzumrichters an eine (speicherprogrammierbare) Steuerung (SPS/PLC) zur Drehzahlsteuerung des Motors, wobei die Steuerung durch eine separate Frequenzumrichter-Steuerung oder durch eine zentrale Leittechnik des Antriebsstrangs gebildet wird.

Das heißt, dass je nachdem, ob die zentrale Leittechnik zur Anbindung des Frequenzumrichters geeignet ist, insbesondere hinsichtlich der Nutzung gleicher Kanäle bzw. Leitungen, kann der Frequenzumrichter besonders aufwandsarm bzw. effizient in das vorhandene System eingebettet werden.

Gemäß einer bevorzugten Ausführungsform kann der Frequenzumrichter ein Frequenzumrichter mit einem Total-Harmonic-Distortion-Wert (THD-Wert) ≤ 5 % oder ein Frequenzumrichter mit einem Total-Harmonic-Distortion-Wert (THD-Wert) ≤ 2 % sein, insbesondere wenn der Frequenzumrichter an den Motor angeschlossen wird, welcher der vor dem Umrüsten in dem Antriebsstrang eingesetzte Motor ist. Das heißt, dass insbesondere, wenn der Motor weitergenutzt werden kann, ein motorfreundlicher Frequenzumrichter eingesetzt wird. Wenn der Motor durch einen anderen Motor ersetzt wird, ist es ggf. nicht notwendig, dass ein motorfreundlicher Frequenzumrichter eingesetzt wird.

Gemäß einer bevorzugten Ausführungsform kann der Frequenzumrichter ein Multilevel-Frequenzumrichter oder ein Frequenzumrichter mit Sinusfilter sein, insbesondere wenn der Frequenzumrichter an den Motor angeschlossen wird, welcher der vor dem Umrüsten in dem Antriebsstrang eingesetzte Motor ist. Das heißt, dass insbesondere, wenn der Motor weitergenutzt werden kann, ein motorfreundlicher Frequenzumrichter eingesetzt wird. Wenn der Motor durch einen anderen Motor ersetzt wird, ist es ggf. nicht notwendig, dass ein motorfreundlicher Frequenzumrichter eingesetzt wird.

Gemäß einer bevorzugten Ausführungsform kann das Verfahren den folgenden Schritt aufweisen:
- Durchführen einer Schwingungsanalyse, insbesondere einer Torsionsschwingungsanalyse und/oder Biegeschwingungsanalyse, vorzugsweise vor der Entnahme der hydrodynamischen Kupplung.

So kann überprüft werden, ob der umzurüstende Antriebsstrang für die Umrüstung geeignet ist.

Gemäß einer bevorzugten Ausführungsform kann das Verfahren den folgenden Schritt aufweisen:
- Durchführen einer Bauraumanalyse, insbesondere hinsichtlich eines Bauraumbedarfs des Frequenzumrichters und/oder der Stromversorgung und/oder eines Anschlusses des Frequenzumrichters an die Stromversorgung und/oder eines Anschlusses des Frequenzumrichters an den Motor.

So kann überprüft werden, ob der umzurüstende Antriebsstrang für die Umrüstung geeignet ist, insbesondere ob genügt Bauraum zur Verfügung steht, um die zusätzlichen Komponenten und deren Anschlüsse zu integrieren.

Gemäß einer bevorzugten Ausführungsform kann das Verfahren die folgenden Schritte aufweisen:
- Durchführen einer Steuerungsanalyse, insbesondere hinsichtlich einer Eignung einer zentralen Leittechnik des Antriebsstrangs zur Steuerung des Frequenzumrichters; und
- Anschließen des Frequenzumrichters an eine separate Frequenzumrichter-Steuerung als die Steuerung zur Drehzahlsteuerung des Motors, wenn die zentrale Leittechnik nicht zur Steuerung des Frequenzumrichters geeignet ist, oder
- Anschließen des Frequenzumrichters an die zentrale Leittechnik als die Steuerung zur Drehzahlsteuerung des Motors, wenn die zentrale Leittechnik zur Steuerung des Frequenzumrichters geeignet ist.

So kann überprüft werden, ob der umzurüstende Antriebsstrang für die Umrüstung geeignet ist, insbesondere ob die zentrale Leittechnik zur Anbindung des Frequenzumrichters geeignet ist, insbesondere hinsichtlich der Nutzung gleicher Kanäle bzw. Leitungen.

Gemäß einer bevorzugten Ausführungsform kann das Verfahren den folgenden Schritt aufweisen:
- Durchführen einer Instrumentierungsanalyse, insbesondere hinsichtlich einer Eignung zur Weiterverwendung eines Temperatursensors und/oder eines Schwingungssensors und/oder einer Ölversorgung, wobei der Antriebsstrang einen Temperatursensor, einen Schwingungssensor und eine Ölversorgung aufweist.

So können bereits vorhandene Komponenten auf effiziente Weise weitergenutzt werden.

Gemäß einer bevorzugten Ausführungsform können die Schritte nacheinander bzw. in der genannten Reihenfolge.

Weiter wird die Aufgabe erfindungsgemäß dadurch gelöst, dass die hydrodynamische Kupplung im Antriebsstrang eliminiert wird und durch eine starre oder flexible Wellenverbindung / Wellenanschluss / Anschluss / Verbindungselement / Koppelbauteil ersetzt wird, die zwischen den Wellen bzw. der ersten Getriebestufe und der Ausgangswelle bzw. zwischen den Getriebestufen angeordnet ist. Die Wellenverbindung ist dazu ausgelegt um schaltfrei und ohne Wandlung Drehzahlen / Drehmoment zu übertragen.

Die Erfindung betrifft gemäß einem ersten erfindungsgemäßen Ausführungsform somit einen drehzahlvariablen Antriebsstrang mit einem Multilevel-Frequenzumrichter bzw. Frequenzumrichtern mit motorfreundlicher Technologie und einer über einen Motor - insbesondere bei Anbindung des Frequenzumrichters für den drehzahlvariablen Betrieb - mit einer antreibbare Eingangswelle und einer Übertragungseinheit verbunden ist, das mit einer Ausgangswelle verbunden ist, wobei die Übertragungseinheit, ohne hydrodynamische Kupplung ausgebildet ist. Zwischen den Wellen ist eine Wellenverbindung angeordnet, die dazu ausgelegt ist, schaltfrei und ohne Wandlung von Drehzahlen/Drehmoment zu übertragen.

Die Erfindung betrifft gemäß einer zweiten erfindungsgemäßen Ausführungsform somit einen drehzahlvariablen Antriebsstrang mit einem Multilevel-Frequenzumrichter bzw. Frequenzumrichtern mit motorfreundlicher Technologie und einer über einen Motor - insbesondere bei Anbindung des Frequenzumrichters für den drehzahlvariablen Betrieb - antreibbaren Eingangswelle, die mit einer Übertragungseinheit verbunden ist, das mit einer Ausgangswelle verbunden ist, wobei die Übertragungseinheit, welche mit einer hydrodynamische Kupplung ausgebildet ist, wenigstens eine erste Getriebestufe aufweist. Nach der ersten Getriebestufe ist eine Wellenverbindung angeordnet, die ausgelegt ist schaltfrei und ohne Wandlung von Drehzahlen / Drehmoment zu übertragen.

Die Wellenverbindung kann beispielsweise als Flanschartige Schraubverbindungen oder zwischengeschaltete Puffer aus Kunststoff oder Metall sein, die aufgeschraubt oder geklemmt sind. Weiterhin kann die Wellenverbindung als Verzahnung, insbesondere als Zusammenspiel von Innen- und Außenverzahnung oder Kaltverzahnung, ausgeführt sein. Weiterhin kann die Wellenverbindung auch als Reibkupplung, insbesondere Nass- oder Trockenkupplung ausgebildet sein und sogar als Doppelkupplung ausgeführt sein. Es bieten sich hier Lamellenkupplungen, Membrankupplungen oder ähnliches an. Auch der Einsatz Antriebs- und Abtriebswelle als eine durchgängige neue Welle ist möglich.

Die Übertragungseinheit kann dabei als hydrodynamische Kupplung mit Getriebe oder ohne Getriebe oder ähnlichem ausgebildet sein.

Mit anderen Worten betrifft die Erfindung einen drehzahlvariablen Antriebsstrang mit modifizierter Getriebekupplung (Wegfall der hydrodynamischen Kupplung) und Implementierung eines Multilevel-Frequenzumrichter bzw. Frequenzumrichtern mit motorfreundlicher Technologie, was insbesondere für Anwendungen auf mittlerer Spannungsebene von Vorteil ist.

Daraus ergeben sich einige Vorteile. Zum einen wird durch das Umrüsten eines vorhandenen Antriebsstrangs mit einer hydrodynamischen Kupplung auf einen drehzahlvariablen Antriebsstrang ohne hydrodynamische Kupplung der Gesamtwirkungsgrad der bestehenden Anlage auf ein Maximalgrad im gesamten Arbeitsbereich erhöht und somit Verlustleistungen bedeutend reduziert. Hinzukommt, dass durch Nutzung der bestehenden Komponenten der Anlage, wie Motor, Komponenten der Getrieberegelkupplung, Öl- und Kühlkreislauf weitestgehend die erforderlichen Ressourcen für die Fertigung solcher Komponenten eingespart wird und somit die Anfangsinvestition bedeutend reduziert wird. Ferner werden die Umbauzeiten deutlich reduziert, da die Anforderungen und der Aufwand im Umbau durch vorhandene Komponenten reduziert werden ohne, dass wesentliche Änderungen im Aufbau des Antriebsstrangs hervorgerufen werden. Ein weiterer Vorteil ergibt sich daraus, dass deutlich verkürzte Umbauzeiten realisiert werden können, welche somit den Ausfall von Betriebsstunden von Großanlagen reduziert. Weiterhin ergibt sich der Vorteil, dass in dem Antriebsstrang alle Arten von Getriebekupplungen einsetzbar sind sowie die Verluste reduziert werden. Weiterhin kann die Konstruktion, das Fundament, die Verkabelung und Instrumentierung bestehen bleiben und muss nicht geändert werden. Weiterhin bietet der Antriebsstrang eine kurze Revisionszeit.

Der größte Vorteil ist die generelle Wirkungsgradverbesserung des gesamten Antriebsstrangs in allen Arbeitspunkten und somit die Einsparung von Energie zum Betreiben der Anlage, wie weiter oben erläutert.

Ein weiterer Vorteil bietet die Erfindung jedoch in der Verbesserung der Anbindung im Versorgungsnetz. Durch die Entkopplung des Drehstrommotors vom Versorgungsnetz durch den Multilevel-Frequenzumrichter bzw. Frequenzumrichtern mit motorfreundlicher Technologie (Nachbildung des annähreden Sinusverlaufs von Spannung und Strom des Wechselstroms) sind beim Hochlauf keine zusätzlichen Absicherungseinheiten bzw. Vorkehrungen zur Netzstabilität des Versorgungsnetzes notwendig. Der Anfahrtsstrom des Drehstrommotors wird auf ein erforderliches Minimum reduziert. Weiterhin kann durch den Einsatz des Multilevel-Frequenzumrichters bzw. Frequenzumrichtern mit motorfreundlicher Technologie gezielt das Verhältnis zwischen Wirkstrom und Blindstrom zum Versorgungsnetz in allen Betriebspunkten eingestellt werden. Zusätzliche Kompensationseinheiten sind nicht erforderlich und alle zusätzlichen Netzanforderungen während des Betriebes werden gewährleistet.

Ein weiterer wesentlicher Vorteil ist, dass in einem Antriebsstrang, welcher eine hydrodynamische Kupplung aufweist, keine Drehzahlstabilität gegeben ist. Durch das Umrüsten werden kritische Drehzahlsprünge vermieden. Unter den "kritischen" Drehzahlsprüngen werden jene durch die Kupplung verursachten unstetigen Drehzahlübertragungen durch auftretende Turbulenzen im Ölstrom in der Kupplung verstanden. Dadurch erhält man eine stabile Drehzahlkennlinie. Falls eine kritische Drehzahl im Antriebsstrang gegeben ist, dann kann diese im Frequenzumrichter ausgeregelt und somit übersprungen werden. Weiterhin kann der Multilever-Frequenzumrichter solche sprunghaften Regelungen (Drehzahlsprünge), im Gegensatz zu hydrodynamischen Kupplungen, sehr schnell realisieren und umsetzen.

Die Erfindung wird nachfolgend auch mit Hilfe einer Zeichnung näher erläutert. Es zeigen:
- Fig. 1: eine schematische Darstellung des erfindungsgemäßen Antriebsstrangs in Zusammenwirkung mit weiteren Komponenten,
- Fig. 2: eine erste Ausführungsform eines zweistufigen Getriebes gemäß einem erfindungsgemäßen Antriebstrang;
- Fig. 3: eine zweite Ausführungsform eines einstufigen Getriebes gemäß einem erfindungsgemäßen Antriebstrang;
- Fig. 4: eine dritte Ausführungsform einer Umrüstung einer hydrodynamischen Kupplung gemäß einem erfindungsgemäßen Antriebstrang
- Fig. 5: ein Wirkungsgraddiagramm des erfindungsgemäßen Antriebsstrangs,

Fign. 6 und 7 eine schematische Darstellung eines erfindungsgemäßen Verfahrens. Die Figuren sind lediglich schematischer Natur und dienen ausschließlich dem Verständnis der Erfindung. Die gleichen Elemente sind mit denselben Bezugszeichen versehen.

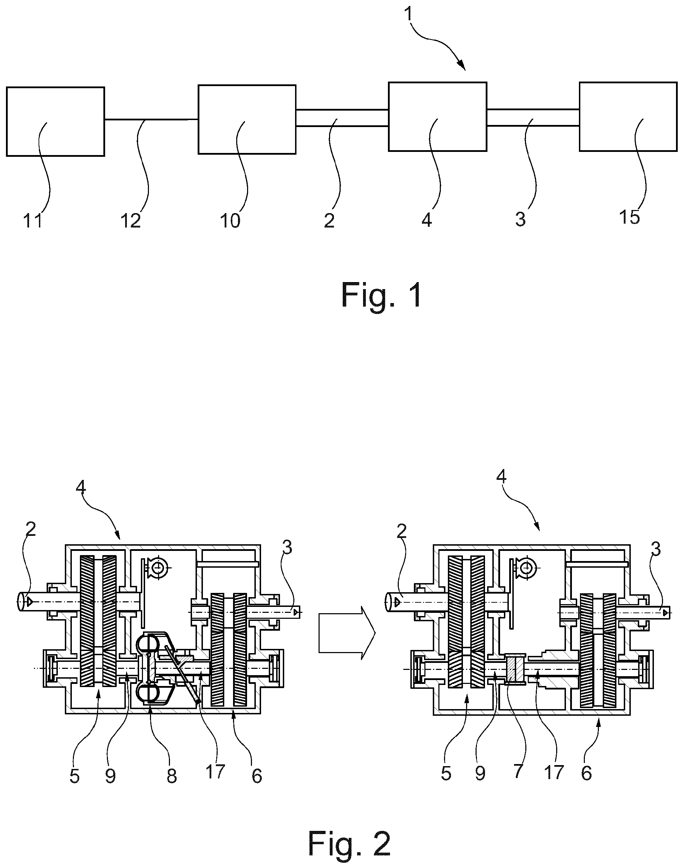

Fig.1 zeigt eine sehr vereinfachte schematische Darstellung eines erfindungsgemäßen Antriebsstrangs 1. Betrieben wird die Anlage von rechts nach links. Beginnend ist die Ausgangswelle 3 dargestellt, welche ausgangsseitig in Wirkverbindung mit einer Arbeitsmaschine 15 und eingangsseitig in Wirkverbindung mit einer Übertragungseinheit 4, welches als einstufiges, zweistufiges oder mehrstufiges Getriebe ausgebildet sein kann, sodass das von der Übertragungseinheit 4 umgesetzte Drehmoment an weitere folgende Komponenten, wie der Arbeitsmaschine 15 der Anlage, wie beispielsweise einer Pumpe, weitergegeben werden kann. Eingangsseitig des Getriebes ist eine Eingangswelle 2 dargestellt, welche die Übertragungseinheit 4 mit einem Motor 10 verbindet. Dabei besteht der drehzahlvariable Antriebsstrang 1 aus den Komponenten Eingangswelle 2, Getriebe/Übertragungseinheit 4 und Ausgangswelle 3. Der Motor 10 überträgt über die Eingangswelle 2 ein vom Motor 10 generiertes Drehmoment an die Übertragungseinheit 4. Durch eine elektrische Leitung 12 ist der Motor 10 mit einem Multilevel-Frequenzumrichter bzw. Frequenzumrichtern mit motorfreundlicher Technologie 11 verbunden, welcher die Drehzahlsteuerung des Motors 10 sowie daraus resultierend die Drehzahlsteuerung von Eingangswelle 2, Übertragungseinheit 4 und Ausgangswelle 3. In einer anderen Ausführungsform, in welchem der Frequenzumrichter 11 keinen Transformator als Bestandteil aufweist, ist zwischen dem Antriebsstrang 1 und dem Frequenzumrichter 11 ein Transformator angeordnet (nicht gezeigt).

Die Darstellung des Aufbaus der Übertragungseinheit erfolgt in den Fign. 2, 3 und 4.

Fig. 2 zeigt eine Gegenüberstellung einer Übertragungseinheit 4 einer zweistufigen Getriebestufe aus dem Stand der Technik (links) und eines zweistufigen Getriebes/Übertragungseinheit eines erfindungsgemäßen Antriebsstrangs(rechts) 1. Die Übertragungseinheit mit zweistufigen Getriebe 4 weist eingangsseitig eine erste Getriebestufe 5 und ausgangsseitig eine zweite Getriebestufe 6 auf. In der Übertragungseinheit mit zweistufigen Getriebe 4 nach Stand der Technik ist zwischen den beiden Getriebestufen 5 und 6 eine hydrodynamische Kopplung 8 angeordnet. Diese Übertragungseinheit 4 ist in dem zweistufigen Getriebe gemäß erfindungsgemäßem Antriebsstrang 1 durch eine Wellenverbindung / Wellenanschluss / Anschluss / Verbindungselement / Koppelbauteil 7 ersetzt. Die Wellenverbindung / Wellenanschluss / Anschluss / Verbindungselement / Koppelbauteil 7 kann als starres oder flexibles Bauteil ausgebildet sein. Der erfindungsgemäße Ansatz beinhaltet auch den Einsatz von neuen Getriebestufen mit geänderten Verzahnungen (Übersetzung) bei Beibehaltung der grundsätzlichen geometrischen Abmaße von Wellenabstand, Lagerposition und Lagergröße. Hierbei kann auch eine direkte Wellenverbindung 7 zwischen den zwei Getriebestufen 5, 6 zum Einsatz gelangen.

In Fig. 2 ist die Eingangswelle 2 über die erste Getriebestufe 5 mit einer Antriebswelle 9 gekoppelt, die Antriebswelle 9 über die hydrodynamische Kupplung 8 mit einer Abtriebswelle 17 gekoppelt, und die Abtriebswelle 17 über die zweite Getriebestufe 6 mit der Ausgangswelle 3 gekoppelt. Durch das Umrüstverfahren wird die hydrodynamische Kupplung 8 durch die Wellenverbindung 7 ersetzt, so dass die Antriebswelle 9 und die Abtriebswelle 17 direkt durch die Wellenverbindung 7 mit dem Übersetzungsverhältnis von 1/1 verbunden sind.

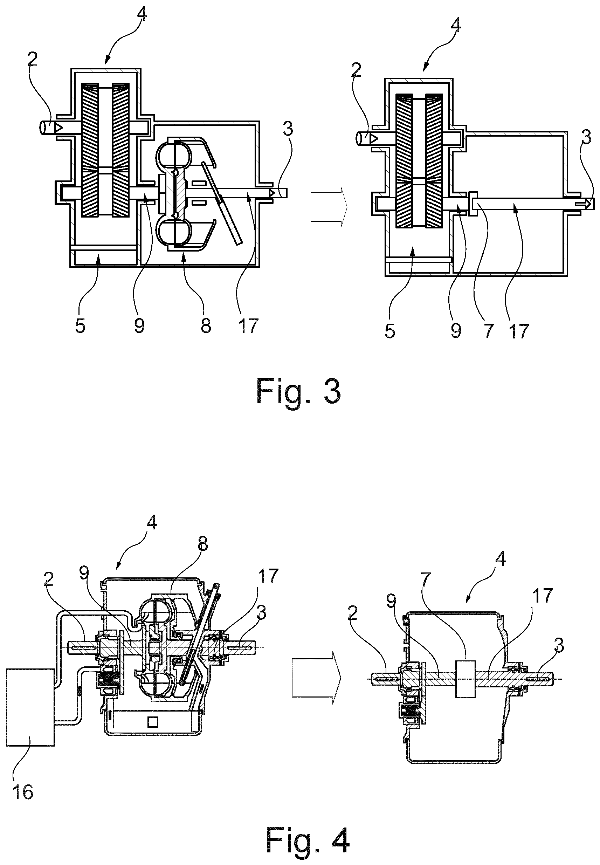

Fig. 3 zeigt eine Übertragungseinheit mit einstufiges Getriebe/Übertragungseinheit 4 nach Stand der Technik (links) sowie eine Übertragungseinheit mit einem einstufigen Getriebe 4 gemäß dem erfindungsgemäßen Antriebstrang 1. Während beim Getriebe 4 des Stands der Technik ausgangsseitig eine hydrodynamische Kupplung/Kopplung 8 (wie oben) mit einer Ausgangswelle 3 angeordnet ist, ist in der erfindungsgemäßen Erfindung (rechts) ausgangsseitig des Getriebes 4 eine Welle 3 angeordnet, die durch eine Wellenverbindung / Wellenanschluss / Anschluss / Verbindungselement / Koppelbauteil 7 starr oder flexibel an die Antriebswelle 9 gekoppelt ist. Der erfindungsgemäße Ansatz beinhaltet auch den Einsatz von einer neuen Getriebestufe mit geänderter Verzahnung (Übersetzung) bei Beibehaltung der grundsätzlichen geometrischen Abmaße von Wellenabstand, Lagerposition und Lagergröße. Hierbei kann auch eine direkte Antriebswelle 9 mit Ausprägung der Ausgangswelle 3 zum Einsatz gelangen.

In Fig. 3 ist die Eingangswelle 2 über die erste Getriebestufe 5 mit der Antriebswelle 9 gekoppelt, die Antriebswelle 9 über die hydrodynamische Kupplung 8 mit der Abtriebswelle 17 gekoppelt, und die Abtriebswelle 17 direkt (d.h. ohne Getriebestufe) mit der Ausgangswelle 3 gekoppelt. Durch das Umrüstverfahren wird die hydrodynamische Kupplung 8 durch die Wellenverbindung 7 ersetzt, so dass die Antriebswelle 9 und die Abtriebswelle 17 direkt durch die Wellenverbindung 7 mit dem Übersetzungsverhältnis von 1/1 verbunden sind.

Fig. 4 zeigt eine Übertragungseinheit 4 mit hydrodynamische Kupplung 8 nach Stand der Technik (links) sowie eine Kopplung gemäß dem erfindungsgemäßen Antriebstrang 1. Während bei der hydrodynamischen Kupplung 8 nach Stand der Technik Eingangsseite (Antriebswelle) 2 und Ausgangsseite (Abtriebswelle) 3 mit der hydrodynamischen Kupplung/Kopplung 8 verbunden sind, ist in der erfindungsgemäßen Erfindung (rechts) eingangs- und ausgangsseitig Wellen durch eine Wellenverbindung / Wellenanschluss / Anschluss / Verbindungselement / Koppelbauteil 7 starr oder flexibel miteinander verbunden. Auch der Einsatz Antriebs- und Abtriebswelle als eine durchgängige neue Welle ist möglich. Je nach Ausführung der Wellenverbindung ist das Einbringen weiterer Lager erforderlich.

In Fig. 4 ist die Eingangswelle 2 direkt (d.h. ohne Getriebestufe) mit der Antriebswelle 9 gekoppelt, die Antriebswelle 9 über die hydrodynamische Kupplung 8 mit der Abtriebswelle 17 gekoppelt, und die Abtriebswelle 17 direkt (d.h. ohne Getriebestufe) mit der Ausgangswelle 3 gekoppelt. Durch das Umrüstverfahren wird die hydrodynamische Kupplung 8 durch die Wellenverbindung 7 ersetzt, so dass die Antriebswelle 9 und die Abtriebswelle 17 direkt durch die Wellenverbindung 7 mit dem Übersetzungsverhältnis von 1/1 verbunden sind.

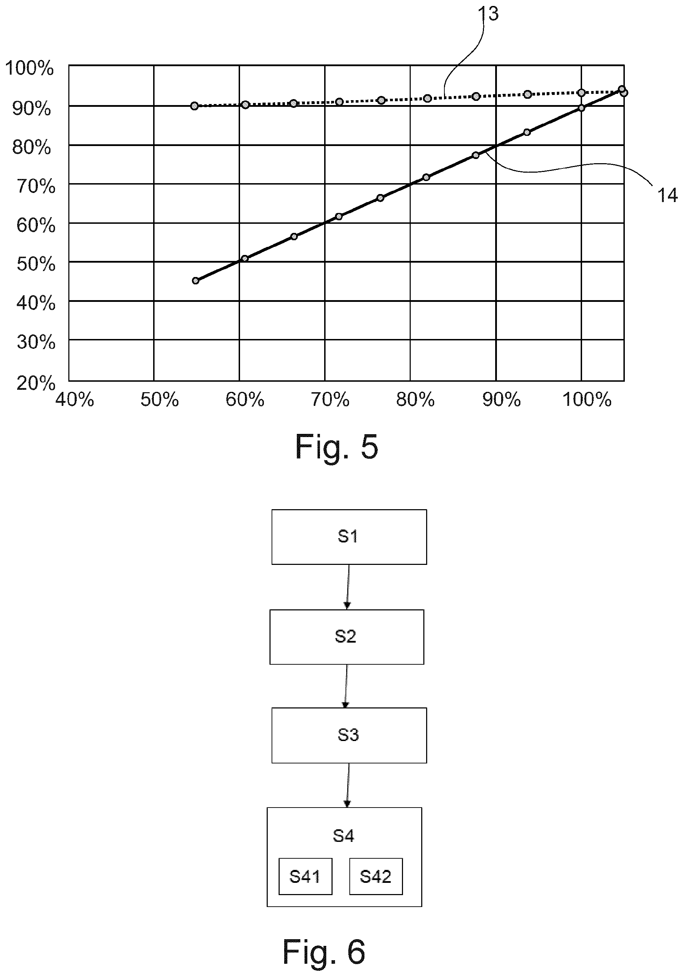

Fig. 5 zeigt ein Wirkungsgraddiagramm des erfindungsgemäßen Antriebsstrangs. Die Gerade 13 stellt dabei den Wirkungsgrad des erfindungsgemäßen Antriebsstrangs dar, während die Gerade 14 den Wirkungsgrad eines Antriebstrangs aus dem Stand der Technik mit hydrodynamischer Kupplung darstellt. Es ist deutlich zu erkennen, dass durch das Ersetzen der hydrodynamischen Kupplung durch eine Wellenverbindung / Wellenanschluss / Anschluss / Verbindungselement / Koppelbauteil 7 der Wirkungsgrad deutlich gesteigert ist.

Die Erfindung ist nicht auf die in den Figuren dargestellten Ausführungsformen beschränkt. Die vorstehende Beschreibung ist daher nicht als beschränkend, sondern als erläuternd anzusehen. Die nachfolgenden Patentansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Patentansprüche und die vorstehende Beschreibung 'erste' und 'zweite' Merkmal definieren, so dient diese Bezeichnung der Unterscheidung zweier (bspw.) gleichartiger Merkmale, ohne eine Rangfolge festzulegen.

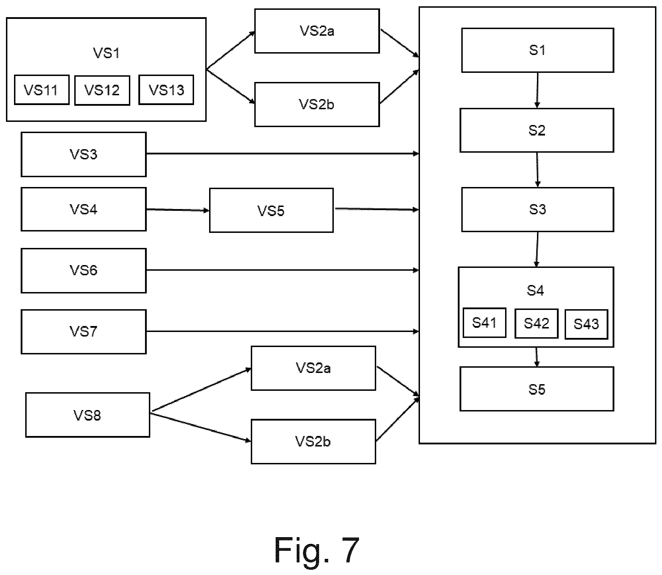

Fign. 6 und 7 zeigt eine funktionale Darstellung eines erfindungsgemäßen Umrüstverfahrens.

Demnach betrifft die Erfindung ein Verfahren zum Umrüsten eines Antriebsstrangs, der den Motor 10, die durch den Motor 10 antreibbare Eingangswelle 2, die mit der Eingangswelle 2 verbundene Übertragungseinheit 4 und die mit der Übertragungseinheit verbundene Ausgangswelle 3 (die wiederum mit einer Arbeitsmaschine 15 verbunden oder verbindbar ist) aufweist.

Dabei weist die Übertragungseinheit 4 die mit der Eingangswelle 2 (direkt oder über die Getriebestufe 5) gekoppelte Antriebswelle 9, die mit der Ausgangswelle 3 (direkt oder über die Getriebestufe 6) gekoppelte Abtriebswelle 17 und die die Antriebswelle 9 mit der Abtriebswelle 17 (direkt) koppelnde hydrodynamische Kupplung 8 auf.

Das Verfahren weist die folgenden Schritte auf.
- einen Schritt S1 einer Entnahme (bzw. eines Ausbaus) der hydrodynamischen Kupplung 8;
- einen Schritt S2 eines Einbaus (bzw. eines Einsetzens) einer Wellenverbindung 7 zur Kopplung der Antriebswelle 9 mit der Abtriebswelle 17, wobei die Wellenverbindung 7 die Antriebswelle 9 und die Abtriebswelle 17 mit einem Übersetzungsverhältnis von 1/1 drehmomentübertragend verbindet;
- einen Schritt S3 eines Einbaus des Frequenzumrichters 11;
- einen Schritt S4 eines Einrichtens des Frequenzumrichters 11.

Dabei weist der Schritt S4 des Einrichtens des Frequenzumrichters 11 die Unterschritte auf:
a) einen Unterschritt S41 eines Anschließens des Frequenzumrichters 11 an den Motor 10; und
b) einen Unterschritt S42 eines Anschließens des Frequenzumrichters 11 an eine Stromversorgung/ein Versorgungsnetz.

Vorzugsweise kann das Verfahren die folgenden Schritte aufweisen:
- einen Schritt VS1 eines Überprüfens einer Eignung des (vor dem Umrüsten in dem Antriebsstrang eingesetzten) Motors 10 zum drehzahlvariablen Betrieb mittels des Frequenzumrichters 11, vorzugsweise vor dem Schritt S4 des Einrichtens des Frequenzumrichters 11; und
- einen Schritt VS2a eines Ersetzens des (vor dem Umrüsten in dem Antriebsstrang eingesetzten) Motors 10 durch einen anderen Motor 10, wenn der (vor dem Umrüsten in dem Antriebsstrang eingesetzte) Motor 10 nicht zum drehzahlvariablen Betrieb mittels des Frequenzumrichters 11 geeignet ist, oder
- einen Schritt VS2b eines Weiterverwendens des (vor dem Umrüsten in dem Antriebsstrang eingesetzten) Motors 10, wenn der (vor dem Umrüsten in dem Antriebsstrang eingesetzte) Motor 10 zum drehzahlvariablen Betrieb mittels des Frequenzumrichters 11 geeignet ist.

Vorzugsweise kann der Schritt VS1 des Überprüfens der Eignung zumindest einen der folgenden Schritte enthalten:
- einen Schritt VS11 eines Überprüfens eines Motorzustands; und/oder
- einen Schritt VS12 eines Überprüfens einer Motorisolation; und/oder
- einen Schritt VS13 eines Überprüfens einer Motorkühlleistung.

Vorzugsweise kann das Verfahren den folgenden Schritt aufweisen:
- einen Schritt VS3 einer Entkopplung des Motors 10 von einer Stromversorgung/einem Versorgungsnetz, vorzugsweise vor dem Schritt S4 des Einrichtens des Frequenzumrichters 11.

Vorzugsweise kann das Verfahren den folgenden Schritt aufweisen:
- einen Schritt VS4 einer Entnahme einer Steuer- und Regeleinheit zur Steuerung der hydrodynamischen Kupplung 8 und einen Schritt VS5 einer Entkopplung der Steuer- und Regeleinheit von einer zentralen Leittechnik des Antriebsstrangs 1.

Vorzugsweise kann das Verfahren, insbesondere der Schritt S4 des Einrichtens des Frequenzumrichters 11, den folgenden Schritt aufweisen:
- einen Unterschritt S43 eines Anschließens des Frequenzumrichters 11 an eine (speicherprogrammierbare) Steuerung (SPS/PLC) zur Drehzahlsteuerung des Motors 10, wobei die Steuerung durch eine separate Frequenzumrichter-Steuerung oder durch eine zentrale Leittechnik des Antriebsstrangs 1 gebildet wird.

Vorzugsweise kann der Frequenzumrichter 11 ein Frequenzumrichter mit einem Total-Harmonic-Distortion-Wert (THD-Wert) ≤ 5 % oder ein Frequenzumrichter mit einem Total-Harmonic-Distortion-Wert (THD-Wert) ≤ 2 % sein, insbesondere wenn der Frequenzumrichter 11 an den Motor 10 angeschlossen wird, welcher der vor dem Umrüsten in dem Antriebsstrang 1 eingesetzte Motor 10 ist.

Vorzugsweise kann der Frequenzumrichter 11 ein Multilevel-Frequenzumrichter oder ein Frequenzumrichter mit Sinusfilter sein, insbesondere wenn der Frequenzumrichter 11 an den Motor 10 angeschlossen wird, welcher der vor dem Umrüsten in dem Antriebsstrang 1 eingesetzte Motor 10 ist.

Vorzugsweise kann das Verfahren den folgenden Schritt aufweisen:
- eines Schritt VS6 Durchführen einer Schwingungsanalyse, insbesondere einer Torsionsschwingungsanalyse und/oder Biegeschwingungsanalyse, vorzugsweise vor der Schritt S1 der Entnahme der hydrodynamischen Kupplung 8.

Vorzugsweise kann das Verfahren den folgenden Schritt aufweisen:
- einen Schritt VS7 Durchführen einer Bauraumanalyse, insbesondere hinsichtlich eines Bauraumbedarfs des Frequenzumrichters 11 und/oder der Stromversorgung und/oder eines Anschlusses des Frequenzumrichters 11 an die Stromversorgung und/oder eines Anschlusses des Frequenzumrichters 11 an den Motor 10, vorzugsweise vor der Schritt S1 der Entnahme der hydrodynamischen Kupplung 8.

Vorzugsweise kann das Verfahren die folgenden Schritte aufweisen:
- einen Schritt VS8 eines Durchführens einer Steuerungsanalyse, insbesondere hinsichtlich einer Eignung einer zentralen Leittechnik des Antriebsstrangs 1 zur Steuerung des Frequenzumrichters 11; und
- einen Schritt S43a eines Anschließens des Frequenzumrichters 11 an eine separate Frequenzumrichter-Steuerung als die Steuerung zur Drehzahlsteuerung des Motors 10, wenn die zentrale Leittechnik nicht zur Steuerung des Frequenzumrichters 11 geeignet ist, oder
- einen Schritt S43b eines Anschließens des Frequenzumrichters 11 an die zentrale Leittechnik als die Steuerung zur Drehzahlsteuerung des Motors 10, wenn die zentrale Leittechnik zur Steuerung des Frequenzumrichters 11 geeignet ist.

Vorzugsweise kann das Verfahren den folgenden Schritt aufweisen:
- einen Schritt VS8 eines Durchführens einer Instrumentierungsanalyse, insbesondere hinsichtlich einer Eignung zur Weiterverwendung eines Temperatursensors und/oder eines Schwingungssensors und/oder einer Ölversorgung.

Vorzugsweise können die Schritte nacheinander bzw. in der genannten Reihenfolge oder zumindest teilweise gleichzeitig erfolgen

Vorzugsweise kann das Verfahren den folgenden Schritt aufweisen:
- einen Schritt S5 eines Durchführens einer Inbetriebnahme des Antriebsstrangs, vorzugsweise nach dem Schritt S4 des Einrichtens des Frequenzumrichters.

### Bezugszeichenliste

- 1: Antriebsstrang
- 2: Eingangswelle
- 3: Ausgangswelle
- 4: Getriebe/Übertragungseinheit
- 5: erste Getriebestufe
- 6: zweite Getriebestufe
- 7: Wellenverbindung
- 8: hydrodynamische Kupplung
- 9: Antriebswelle
- 10: Motor
- 11: (Multilevel-)Frequenzumrichters
- 12: elektrische Leitung
- 13: Wirkungsgradgraph des erfindungsgemäßen Antriebsstrangs
- 14: Wirkungsgradgraph eines Antriebsstrangs mit hydrodynamischer Kupplung
- 15: Arbeitsmaschine
- 16: Ölkühlung
- 17: Abtriebswelle

## Patentansprüche

1. Verfahren zum Umrüsten eines Antriebsstrangs (1), der einen Motor (10), eine durch den Motor (10) antreibbare Eingangswelle (2), eine mit der Eingangswelle (2) verbundene Übertragungseinheit (4) und eine mit der Übertragungseinheit (4) verbundene Ausgangswelle (3) aufweist, wobei die Übertragungseinheit (4) eine mit der Eingangswelle (2) gekoppelte Antriebswelle (9), eine mit der Ausgangswelle (3) gekoppelte Abtriebswelle (17) und eine die Antriebswelle (9) mit der Abtriebswelle (17) koppelnde hydrodynamische Kupplung (8) aufweist, mit den folgenden Schritten:
- Entnahme der hydrodynamischen Kupplung (8) (S1);
- Einbau einer Wellenverbindung (7) zur Kopplung der Antriebswelle (9) mit der Abtriebswelle (17) (S2), wobei die Wellenverbindung (7) die Antriebswelle (9) und die Abtriebswelle (17) mit einem Übersetzungsverhältnis von 1/1 drehmomentübertragend verbindet;
- Einbau eines Frequenzumrichters (11) (S3);
- Einrichten des Frequenzumrichters (11) (S4):
a) Anschließen des Frequenzumrichters (11) an den Motor (10) (S41); und
b) Anschließen des Frequenzumrichters (11) an eine Stromversorgung/ein Versorgungsnetz (S42).

2. Verfahren nach Anspruch 1, mit den folgenden Schritten:
- Überprüfen einer Eignung des Motors (10) zum drehzahlvariablen Betrieb mittels des Frequenzumrichters (11) (VS1), vorzugsweise vor dem Einrichten des Frequenzumrichters (S4); und
- Ersetzen des Motors (10) durch einen anderen Motor (VS2a), wenn der Motor (10) nicht zum drehzahlvariablen Betrieb mittels des Frequenzumrichters (11) geeignet ist, oder
- Weiterverwenden des Motors (10) (VS2b), wenn der Motor (10) zum drehzahlvariablen Betrieb mittels des Frequenzumrichters (11) geeignet ist.

3. Verfahren nach Anspruch 2, wobei das Überprüfen der Eignung (VS1) zumindest einen der folgenden Schritte enthält:
- Überprüfen eines Motorzustands (VS11); und/oder
- Überprüfen einer Motorisolation (VS12); und/oder
- Überprüfen einer Motorkühlleistung (VS13).

4. Verfahren nach einem der Ansprüche 1 bis 3, mit dem folgenden Schritt:
- Entkopplung des Motors (10) von einer Stromversorgung/einem Versorgungsnetz (VS3), vorzugsweise vor dem Einrichten des Frequenzumrichters (S4).

5. Verfahren nach einem der Ansprüche 1 bis 4, mit dem folgenden Schritt:
- Entnahme einer Steuer- und Regeleinheit zur Steuerung der hydrodynamischen Kupplung (8) (VS4) und Entkopplung der Steuer- und Regeleinheit von einer zentralen Leittechnik (VS5) des Antriebsstrangs (1).

6. Verfahren nach einem der Ansprüche 1 bis 5, mit dem folgenden Schritt:
- Anschließen des Frequenzumrichters (11) an eine Steuerung zur Drehzahlsteuerung des Motors (10) (S43), wobei die Steuerung durch eine separate Frequenzumrichter-Steuerung oder durch eine zentrale Leittechnik des Antriebsstrangs (1) gebildet wird.

7. Verfahren nach einem der Ansprüche 2 bis 6, wobei der Frequenzumrichter ein Frequenzumrichter mit einem Total-Harmonic-Distortion-Wert ≤ 5 % oder ein Frequenzumrichter mit einem Total-Harmonic-Distortion-Wert ≤ 2 % ist, insbesondere wenn der Frequenzumrichter (11) an den Motor (10) angeschlossen wird, welcher der vor dem Umrüsten in dem Antriebsstrang (1) eingesetzte Motor (10) ist.

8. Verfahren nach einem der Ansprüche 2 bis 7, wobei der Frequenzumrichter ein Multilevel-Frequenzumrichter oder ein Frequenzumrichter mit Sinusfilter ist, insbesondere wenn der Frequenzumrichter (11) an den Motor (10) angeschlossen wird, welcher der vor dem Umrüsten in dem Antriebsstrang (1) eingesetzte Motor (10) ist.

9. Verfahren nach einem der Ansprüche 1 bis 8, mit dem folgenden Schritt:
- Durchführen einer Schwingungsanalyse, insbesondere einer Torsionsschwingungsanalyse und/oder Biegeschwingungsanalyse (VS6), vorzugsweise vor der Entnahme der hydrodynamischen Kupplung (8) (S1).

10. Verfahren nach einem der Ansprüche 1 bis 9, mit dem folgenden Schritt:
- Durchführen einer Bauraumanalyse (VS7), insbesondere hinsichtlich eines Bauraumbedarfs des Frequenzumrichters (11) und/oder der Stromversorgung und/oder eines Anschlusses des Frequenzumrichters (11) an die Stromversorgung und/oder eines Anschlusses des Frequenzumrichters (11) an den Motor (10).

11. Verfahren nach einem der Ansprüche 6 bis 10, mit den folgenden Schritten:
- Durchführen einer Steuerungsanalyse, insbesondere hinsichtlich einer Eignung einer zentralen Leittechnik des Antriebsstrangs (1) zur Steuerung des Frequenzumrichters (VS7); und
- Anschließen des Frequenzumrichters an eine separate Frequenzumrichter-Steuerung als die Steuerung zur Drehzahlsteuerung des Motors (S43a), wenn die zentrale Leittechnik nicht zur Steuerung des Frequenzumrichters (11) geeignet ist, oder
- Anschließen des Frequenzumrichters an die zentrale Leittechnik als die Steuerung zur Drehzahlsteuerung des Motors (S43b), wenn die zentrale Leittechnik zur Steuerung des Frequenzumrichters (11) geeignet ist.

12. Verfahren nach einem der Ansprüche 1 bis 11, wobei der Antriebsstrang (1) einen Temperatursensor, einen Schwingungssensor und eine Ölversorgung aufweist, mit dem folgenden Schritt:
- Durchführen einer Instrumentierungsanalyse, insbesondere hinsichtlich einer Eignung zur Weiterverwendung eines Temperatursensors und/oder eines Schwingungssensors und/oder einer Ölversorgung (VS8).

13. Verfahren nach einem der Ansprüche 1 bis 12, wobei die Schritte in der genannten Reihenfolge erfolgen.

## Claims

1. Method for retrofitting a drive train (1) comprising a motor (10), an input shaft (2) drivable by the motor (10), a transmission unit (4) connected to the input shaft (2), and an output shaft (3) connected to the transmission unit (4), wherein the transmission unit (4) has a drive shaft (9) coupled to the input shaft (2), an pinion shaft (17) coupled to the output shaft (3), and a hydrodynamic clutch (8) coupling the drive shaft (9) and the pinion shaft (17), comprising the following steps:
- Removal of the hydrodynamic clutch (8) (S1);
- Installation of a shaft connection (7) for coupling the drive shaft (9) to pinion shaft (17) (S2), wherein the shaft connection (7) connects the drive shaft (9) and the pinion shaft (17) with a transmission ratio of 1/1 for torque transmission;
- Installation of a frequency converter (11) (S3);
- Setting up the frequency converter (11) (S4):
a) Connecting the frequency converter (11) to the motor (10) (S41); and
b) Connecting the frequency converter (11) to a power supply/supply network (S42).

2. Method according to claim 1, comprising the following steps:
- Checking a suitability of the motor (10) for variable speed operation using the frequency converter (11) (VS1), preferably before setting up the frequency converter (S4); and
- Replacing the motor (10) with another motor (VS2a) if the motor (10) is not suitable for variable speed operation using the frequency converter (11), or
- Continuing to use the motor (10) (VS2b) if the motor (10) is suitable for variable speed operation using the frequency converter (11).

3. Method according to claim 2, wherein checking the suitability (VS1) includes at least one of the following steps:
- Checking a motor condition (VS11); and/or
- Checking a motor insulation (VS12); and/or
- Checking a motor cooling performance (VS13).

4. Method according to one of claims 1 to 3, comprising the following step:
- Disconnecting the motor (10) from a power supply/supply network (VS3), preferably before setting up the frequency converter (S4).

5. Method according to one of claims 1 to 4, comprising the following step:
- Removal of a control and regulation unit for controlling the hydrodynamic coupling (8) (VS4) and decoupling the control and regulation unit from a central control system (VS5) of the drive train (1).

6. Method according to one of claims 1 to 5, comprising the following step:
- Connecting the frequency converter (11) to a control system for controlling a speed of the motor (10) (S43), wherein the control system is formed by a separate frequency converter control system or by a central control system of the drive train (1).

7. Method according to one of claims 2 to 6, wherein the frequency converter is a frequency converter with a total harmonic distortion value ≤ 5% or a frequency converter with a total harmonic distortion value ≤ 2%, in particular when the frequency converter (11) is connected to the motor (10), which is the motor (10) used in the drive train (1) prior to retrofitting.

8. Method according to one of claims 2 to 7, wherein the frequency converter is a multilevel frequency converter or a frequency converter with a sine filter, in particular if the frequency converter (11) is connected to the motor (10), which is the motor (10) used in the drive train (1) prior to retrofitting.

9. Method according to one of claims 1 to 8, comprising the following step:
- Performing a vibration analysis, in particular a torsional vibration analysis and/or bending vibration analysis (VS6), preferably before removal of the hydrodynamic clutch (8) (S1).

10. Method according to one of claims 1 to 9, comprising the following step:
- Performing an installation space analysis (VS7), in particular with regard to installation space requirements of the frequency converter (11) and/or the power supply and/or a connection of the frequency converter (11) to the power supply and/or a connection of the frequency converter (11) to the motor (10).

11. Method according to one of claims 6 to 10, comprising the following steps:
- Performing a control analysis, in particular with regard to a suitability of a central control system of the drive train (1) for controlling the frequency converter (VS7); and
- Connecting the frequency converter to a separate frequency converter control system as the control system for controlling a speed of the motor (S43a) if the central control system is not suitable for controlling the frequency converter (11), or
- Connecting the frequency converter to the central control system as the control system for controlling a speed of the motor (S43b) if the central control system is suitable for controlling the frequency converter (11).

12. Method according to one of claims 1 to 11, wherein the drive train (1) comprises a temperature sensor, a vibration sensor, and an oil supply, with the following step:
- Performing an instrumentation analysis, in particular with regard to a suitability for continuation of a use of a temperature sensor and/or a vibration sensor and/or an oil supply (VS8).

13. Method according to one of claims 1 to 12, wherein the steps are performed in the order specified.

## Revendications

1. Procédé de rééquipement d'un groupe motopropulseur (1) qui présente un moteur (10), un arbre d'entrée (2) entraînable par le moteur (10), une unité de transmission (4) reliée à l'arbre d'entrée (2) et un arbre de sortie (3) relié à l'unité de transmission (4), dans lequel l'unité de transmission (4) présente un arbre d'entraînement (9) couplé à l'arbre d'entrée (2), un arbre de sortie (17) couplé à l'arbre de sortie (3) et un couplage (8) hydrodynamique couplant l'arbre d'entraînement (9) à l'arbre de sortie (17), avec les étapes suivantes :
- le retrait du couplage hydrodynamique (8) (S1) ;
- le montage d'une liaison d'arbre (7) pour le couplage de l'arbre d'entraînement (9) avec l'arbre de sortie (17) (S2), dans lequel la liaison d'arbre (7) relie l'arbre d'entraînement (9) et l'arbre de sortie (17) avec un rapport de transmission de 1/1 par transmission de couple ;
- le montage d'un convertisseur de fréquence (11) (S3) ;
- l'installation du convertisseur de fréquence (11) (54) :
a) le raccordement du convertisseur de fréquence (11) au moteur (10) (S41) ; et
b) le raccordement du convertisseur de fréquence (11) à une alimentation en courant/un réseau d'alimentation (S42).

2. Procédé selon la revendication 1, avec les étapes suivantes :
- la vérification d'une aptitude du moteur (10) pour le fonctionnement variable en vitesse de rotation au moyen du convertisseur de fréquence (11) (VS1), de préférence avant l'installation du convertisseur de fréquence (S4) ; et
- le remplacement du moteur (10) par un autre moteur (VS2a), lorsque le moteur (10) n'est pas approprié pour le fonctionnement variable en vitesse de rotation au moyen du convertisseur de fréquence (11) ou
- la réutilisation du moteur (10) (VS2b), lorsque le moteur (10) n'est pas approprié au fonctionnement variable en vitesse de rotation au moyen du convertisseur de fréquence (11).

3. Procédé selon la revendication 2, dans lequel la vérification de l'aptitude (VS1) contient au moins l'une des étapes suivantes :
- la vérification d'un état de moteur (VS11) ; et/ou
- la vérification d'une isolation de moteur (VS12) ; et/ou
- la vérification d"une puissance de refroidissement de moteur (VS13).

4. Procédé selon l'une quelconque des revendications 1 à 3, avec l'étape suivante :
- le découplage du moteur (10) d'une alimentation en courant/d'un réseau d'alimentation (VS3), de préférence avant l'installation du convertisseur de fréquence (S4).

5. Procédé selon l'une quelconque des revendications 1 à 4, avec l'étape suivante :
- le retrait d'une unité de commande et de régulation pour la commande du couplage hydrodynamique (8) (VS4) et le découplage de l'unité de commande et de régulation d'une système de commande central (VS5) du groupe motopropulseur (1).

6. Procédé selon l'une quelconque des revendications 1 à 5, avec l'étape suivante :
- le raccordement du convertisseur de fréquence (11) à une commande pour la commande de vitesse de rotation du moteur (10) (S43), dans lequel la commande est formée par une commande de convertisseur de fréquence séparée ou par un système de commande central du groupe motopropulseur (1).

7. Procédé selon l'une quelconque des revendications 2 à 6, dans lequel le convertisseur de fréquence est un convertisseur de fréquence avec une valeur de distorsion harmonique totale ≤ 5 % ou un convertisseur de fréquence avec une valeur de distorsion harmonique totale ≤ 2 %, en particulier lorsque le convertisseur de fréquence (11) est raccordé au moteur (10) qui est le moteur (10) utilisé avant le rééquipement dans le groupe motopropulseur (1).

8. Procédé selon l'une quelconque des revendications 2 à 7, dans lequel le convertisseur de fréquence est un convertisseur de fréquence multiniveau ou un convertisseur de fréquence avec un filtre sinus, en particulier lorsque le convertisseur de fréquence (11) est raccordé au moteur (10) qui est le moteur (10) utilisé avant le rééquipement dans le groupe motopropulseur (1).

9. Procédé selon l'une quelconque des revendications 1 à 8, avec l'étape suivante :
- la réalisation d'une analyse d'oscillation, en particulier d'une analyse d'oscillation et torsion et/ou analyse d'oscillation et flexion (VS6), de préférence avant le retrait du couplage hydrodynamique (8) (S1).

10. Procédé selon l'une quelconque des revendications 1 à 9, avec l'étape suivante :
- la réalisation d'une analyse d'encombrement (VS7), en particulier en ce qui concerne un besoin d'encombrement du convertisseur de fréquence (11) et/ou de l'alimentation en courant et/ou d'un raccordement du convertisseur de fréquence (11) à l'alimentation en courant et/ou d'un raccord du convertisseur de fréquence (11) au moteur (10).

11. Procédé selon l'une quelconque des revendications 6 à 10, avec les étapes suivantes :
- la réalisation d'une analyse de commande, en particulier en ce qui concerne une aptitude d'un système de commande central du groupe motopropulseur (1) pour la commande du convertisseur de fréquence (VS7) ; et
- le raccordement du convertisseur de fréquence à une commande de convertisseur de fréquence séparée comme la commande pour la commande de vitesse de rotation du moteur (S43a), lorsque le système de commande central n'est pas approprié à la commande du convertisseur de fréquence (11) ou
- le raccordement du convertisseur de fréquence au système de commande central comme la commande pour la commande de vitesse de rotation du moteur (S43b), lorsque le système de commande central est approprié à la commande du convertisseur de fréquence (11).

12. Procédé selon l'une quelconque des revendications 1 à 11, dans lequel le groupe motopropulseur (1) présente un capteur de température, un capteur d'oscillation et une alimentation en huile, avec l'étape suivante :
- la réalisation d'une analyse d'instrumentation, en particulier en ce qui concerne une aptitude de réutilisation d'un capteur de température et/ou d'un capteur d'oscillation et/ou d'une alimentation en huile (VS8).

13. Procédé selon l'une quelconque des revendications 1 à 12, dans lequel les étapes s'effectuent selon l'ordre indiqué.
